# NEUE EUROPÄISCHE PATENTSCHRIFT

(11) **EP 1 030 427 B2**
(45) Veröffentlichungstag und Bekanntmachung des Hinweises auf die Entscheidung über den Einspruch: **27.08.2008**
(45) Hinweis auf die Patenterteilung: 19.05.2004
(21) Anmeldenummer: 00100327.6
(22) Anmeldetag: 07.01.2000
(51) Int. Cl.: H02H 7/085, E05F 15/00

(54) **Einklemmschutzsystem**
Anti-trap system
Dispositif de sécurité anti-pincement

(30) Priorität: 18.02.1999 DE 19906705
(43) Veröffentlichungstag der Anmeldung: 23.08.2000
(73) Patentinhaber: Bayerische Motoren Werke Aktiengesellschaft, 80809 München (DE)
(72) Erfinder: Kaindl, Michael, 84061 Ergoldsbach (DE)

(56) Entgegenhaltungen:
- DE-A- 3 514 223
- DE-A- 19 534 018
- DE-A- 19 711 979
- US-A- 4 328 451

## Beschreibung

Die Erfindung betrifft ein Einklemmschutzsystem nach dem Oberbegriff des Anspruchs 1.

Einklemmschutzsysteme sind heutzutage vielfach bekannt (z.B. US-A-4 328 451). Dabei werden beispielsweise bei Fahrzeugfenstern oder Schiebedächern entweder direkt über eine Schaltleiste oder indirekt über Strommessung, Druckmessung, Drehzahlerfassung, etc. Einklemmsituationen erfaßt. Liegt eine solche Einklemmsituation vor, werden Relais von elektrischen Antrieben entsprechend angesteuert und je nach Ausführungsform das zu bewegende Teil gestoppt oder in bestimmter Weise zurückverfahren.

Die bekannten Systeme weisen jedoch mehrere Schwachpunkte auf. In Fällen einer Schwergängigkeit oder Systemstörung, wie sie z. B. bei einer Vereisung vorliegt, muß eine Möglichkeit vorgesehen werden, eine Fahrzeugscheibe oder ein Schiebedach trotz der Schwergängigkeit zu schließen. Bisherige Lösungen, die dieses Problem lösen, schalten den Einklemmschutz dann ab.

Überdies gibt es in manchen Ländern die Anforderung einer Zwangsschließung, beispielsweise bei einem "Angriff' von außen (Panik-Close). Auch bei einem solchen Panik-Close-Schließvorgang ist der Einklemmschutz in der Regel nicht mehr gegeben.

Beispielsweise wird bei fortwährendem Drücken eines Schalters für die Bewegung des Fensterhebers oder des Schiebedachs die Bewegung unabhängig vom Einklemmschutz fortgesetzt. Andererseits ist es bekannt, die Bewegung des beweglichen Teils zunächst zu stoppen und erst nach erneuter Betätigung des Bedienelements fortzusetzen. Obwohl diese Funktionalitäten in den Bedienungsanleitungen erklärt sind, sind sie in dem Bewußtsein der Benutzer meist nicht vorhanden.

Aufgabe der Erfindung ist es daher, ein einfaches Einklemmschutzsystem anzubieten, welches die vorgenannten Probleme überwindet und ein sicheres Schließen eines zu bewegenden Teiles auch bei einer Betriebsunregelmäßigkeit gewährleistet.

Diese Aufgabe ist durch die im Anspruch 1 genannten Merkmale gelöst. Ein erfindungswesentliches Merkmal ist es, beim Feststellen einer Unregelmäßigkeit der Bewegung eines zu bewegenden Teiles die Bewegung zunächst zu unterbrechen und dieses dann mit einer höheren Abschaltschwelle weiterzubewegen. In Fällen einer Schwergängigkeit oder Systemstörung, wie sie z. B. bei einer Vereisung vorliegt, kann die Schwergängigkeit damit überwunden und die Bewegung funktionssicher fortgesetzt werden. Im Falle einer Panik-Close-Betätigung wird einem möglichen Angreifer die Chance gegeben, beispielsweise die Hand aus dem Schließbereich zu entfernen. Macht er davon nicht sofort Gebrauch, so wird versucht, mit einem größer werdenden Druck zu schließen.

Gemäß einer vorteilhaften Ausführungsform wird eine maximale Abschaltschwelle eingeführt, um einer Zerstörung des Systems oder einer ernsthaften Verletzung einer Person vorzubeugen.

Eine besonders bevorzugte Ausführungsform ist dadurch gekennzeichnet, daß vor jedem Weiterbewegen des beweglichen Teils dieses geringfügig zurückverfahren wird. Gerade durch diese Hin- und Herbewegung kann eine Schwergängigkeit überwunden werden. Überdies bietet sich durch diese Maßnahme im Falle einer Panik-Close-Bedienung die Möglichkeit, daß ein Eindringling sich relativ unbehindert wieder zurückzieht. Vorzugsweise wird die vorgenannte Funktionalität bei Überdrückthalten eines Bedienschalters aktiv. Insbesondere reversiert das bewegliche Teil nur um einige Millimeter, d. h. nicht wie bei einem normalen Einklemmfall um beispielsweise 20 cm - um dann wieder mit einer etwas höheren Abschaltschwelle die Schließbewegung fortzusetzen. Das Fenster schließt damit ruckweise, aber letztlich mit der maximalen Kraft, ohne daß die Bedienung erneut zu beginnen ist. Zudem macht der Bewegungsablauf den Benutzer auf das Vorliegen einer Störung aufmerksam.

Die kurzen Ansteuerzeiten sind, ebenso wie die gezielte Steuerung und die Steigerung der Schließkraft bzw. der Drehmomente, mit Halbleiterelementen, beispielsweise über schnelle Umpolvorgänge oder PWM-Modulation (Pulsweitenmodulation) bzw. Linearregelung ohne Schwierigkeiten realisierbar.

Eine weitere, besonders bevorzugte Ausführungsform ist dadurch gekennzeichnet, daß die auftretende Unregelmäßigkeit dem Fahrzeugbediener mitgeteilt wird, vorzugsweise akustisch, haptisch oder optisch. Durch dieses Feedback erhält der Fahrzeugbediener zusätzlich zu dem ruckweisen Schließvorgang eine Mitteilung über eine Störung bei der Bewegung des beweglichen Teiles. Einfache Feedback-Möglichkeiten sind akustische Mitteilungen wie z. B. Gong, Sirene oder Sprachausgabe.

Besonders geeignet ist jedoch die Verwendung von rückmeldenden Bedienschaltern, die im Unterschied zu bisherigen Systemen vom Steuergerät oder über ein Bus-System Statusinformationen - beispielsweise vom Aktuator - bekommen und dem Fahrzeugbediener zurückmelden. Im Bedienelement kann als Rückmeldung ein wahrnehmbares Signal ausgegeben werden, z. B. ein akustisches, optisches oder haptisches Signal (wie Vibration). Ein Vibrationssignal kann z. B. entsprechend der vom Aktuator erzeugten Kraft in seiner Intensität und/oder Frequenz zunehmen.

Eine weitere Rückmeldungsmöglichkeit besteht darin, den Zustand des Aktuators dadurch mitzuteilen, daß die für die Fortführung der Schließaktion nötige Betätigungskraft am Bedienschalter erhöht werden muß oder daß sogar aktiv eine Gegenkraft aufgebaut wird. Damit wäre eine Analogie zur traditionellen Bedienkurbel geschaffen, bei welcher der Benutzer über eine Störung oder Einklemmungen über die Betätigungskraft informiert wurde.

Zur Rückmeldung über Vibration wäre im Bedienelement neben dem Schaltelement ein kleiner Aktuator, z. B. ein Elektromagnet, ein Elektromotor oder ein Piezoelement einzubauen.

Zur Steuerung über einen erhöhten Kraftaufwand kann das heute übliche Schaltelement durch druckempfindliche Sensoren ersetzt werden. Hierzu sind Siliziumsensoren, Dehnungsmeßstreifen, Folien mit Halbleiterpolymeren, Piezoelemente oder besondere Kontaktwerkstoffe (z. B. leitfähige Mischungen) auf dem Markt verfügbar.

Für eine Rückmeldung, bei der eine der Bedienkraft entgegensetzte Kraft aufgebaut wird, ist analog zu der Vibration ein Aktuator nötig. Da hier die Geschwindigkeit der Gegenkraft nicht von entscheidender Bedeutung ist, bietet sich eine relativ neuartige Aktuatortechnik an, wie sie z. B. aus der Akkutechnik in Form von Verstelleinheiten, die bei einem elektrischen Lade-/Entladevorgang eine Längenänderung hervorrufen, bekannt sind. Alternativ wären auch Techniken einsetzbar, wie sie aus der Fahrwerkstechnik in Form von Flüssigkeiten, die bei Stromfluß ihre Viskosität ändem, bekannt sind. Wichtig ist nicht die Art der Feedback-Rückkopplung an den Fahrzeugbediener, sondern daß eine Feedback-Rückkopplung überhaupt erfolgt.

Mit den vorgenannten Maßnahmen kann das Risiko einer Beschädigung von Personen und Sachen minimiert und eine besonders funktionssichere Einklemmschutzvorrichtung realisiert werden. Der Vorteil einer Rückmeldung der Einklemmung an den Benutzer ist, daß der Benutzer im Gegensatz zur heutigen Methode ein direkt wahrnehmbares Feedback über die Situation bekommt.

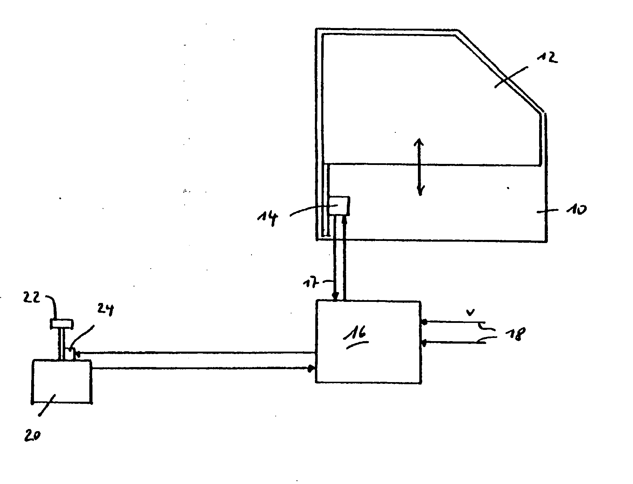

Nachfolgend wird ein besonders einfaches Ausführungsbeispiel der Erfindung anhand der einzigen beiliegenden Zeichnung näher erläutert. Die Zeichnung zeigt in blockdiagrammartiger Weise eine Fahrzeugtür 10, welche ein nach oben und unten (Doppelpfeil) bewegliches Fenster 12 umfaßt. Das Fenster 12 wird von einem als Aktuator dienenden Elektromotor 14 angetrieben. Der Elektromotor 14 erhält seine Betriebssignale von einer Steuereinrichtung 16, die wiederum Betriebsbedingungen 17 beim Betätigen des Fenster 12 wie Drehzahl, Stromaufnahme, etc., mitgeteilt bekommt. Durch die Aufnahme der Betriebsparameter des Motors 14 kann die Steuereinrichtung 16 bei der Betätigung des Fensters 12 auf Unregelmäßigkeiten schließen. Im Einzelnen wird dazu nicht näher eingegangen, da vielfältige Möglichkeiten auch aus dem Stand der Technik zur Ermittlung von Unregelmäßigkeiten über Motorsignale bekannt sind. Die Steuereinrichtung 16 erhält überdies von extern Eingangssignale 18, z. B. die Fahrzeugeschwindigkeit.

Ferner ist ein Bedienschalter 20 mit einem Betätigungsknopf 22 vorgesehen, der seine Schaltinformation an die Steuereinrichtung 16 abgibt. Wird die Taste 22 des Bedienschalters 20 gedrückt, so gibt die Steuereinrichtung 16 ein entsprechendes Signal an den Motor 14 für das Fenster 12 ab.

Werden beim Betrieb des Fensters 12 über den Motor 14 Unregelmäßigkeiten von der Steuereinrichtung 16 festgestellt, so erzeugt diese ein Signal, welches an einen Aktuator 24, der am Bedienschalter 20 angeordnet ist, weitergegeben wird. Der Aktuator 24 erzeugt an dem Taster 22 eine Gegenkraft, welche vom Fahrzeugbediener haptisch wahrgenommen werden kann. Durch kontinuierliches Drücken des Tasters 22 wird trotz der Rückmeldung über den Aktuator 24 weiter ein Signal an die Steuereinheit 16 gegeben. Diese stoppt den Schließvorgang zunächst und setzt ihn dann mit erhöhter Schließkraft fortsetzt. Das Stoppen erfolgt dabei bei einer bestimmten Abschaltschwelle. Im vorliegenden Falle wird das Fenster um einige Millimeter zurückverfahren und bei kontinuierlicher Betätigung des Schalters die Schließung des Fensters mit einer erhöhten Abschaltschwelle fortgesetzt. Dies geschieht solange, bis eine maximale Abschaltschwelle erreicht ist. Ab der maximalen Abschaltschwelle wird die Bewegung des Fensters 12 dann vollständig gestoppt.

Mit der vorgenannt beschriebenen Ausführungsform ergibt sich eine einfache Möglichkeit, dem Fahrer die Unregelmäßigkeit oder Störung mitzuteilen und das zu bewegende Teil (hier: Fenster) dennoch möglichst funktionssicher zu schließen.

## Patentansprüche

1. Einklemmschutzsystem für bewegliche Teile eines Fahrzeugs mit einem Bedienschalter (20, 22) für ein oder mehrere zu bewegende Teile (12), einem oder mehreren, den Bedienschalter (20, 22) zugeordneten Aktuatoren (14), einer Steuereinrichtung (16) für den oder die Aktuatoren (14), die ein Signal von dem Bedienschalter (20, 22) erhält und mit einer mit der Steuereinrichtung (16) gekoppelten Einrichtung zur Ermittlung einer Unregelmäßigkeit bei der Bewegung des beweglichen Teiles (12),
**dadurch gekennzeichnet, daß** die Steuereinrichtung (16) so gestaltet ist, daß bei einer Aktivierung des Bedienschalters (20, 22) und dem Detektieren einer Unregelmäßigkeit bei der Bewegung des beweglichen Teiles (12) die Bewegung zunächst unterbrochen und danach mit einer höheren Abschaltschwelle fortgesetzt wird, ohne dass die Bedienung erneut zu beginnen ist.

2. Einklemmschutzsystem nach Anspruch 1,
**dadurch gekennzeichnet,**
**daß** die Bewegung des beweglichen Teiles (12) bei einer maximalen Abschaltschwelle endgültig unterbrochen wird.

3. Einklemmschutzsystem nach Anspruch 1 oder 2,
**dadurch gekennzeichnet,**
**daß** vor jedem Weiterbewegen des beweglichen Teils (12) dieses geringfügig zurückverfahren wird.

4. Einklemmschutzsystem nach Anspruch 3,
**dadurch gekennzeichnet,**
**daß** die Zurückbewegung im Bereich von 1 bis 7 mm erfolgt.

5. Einklemmschutzsystem nach einem der vorgenannten Ansprüche,
**dadurch gekennzeichnet,**
**daß** der Bedienschalter eine Feedback-Vorrichtung (24) aufweist, die bei einer Unregelmäßigkeit bei der Bewegung des zu bewegenden Teils (12) von der Steuereinrichtung (16) ein Signal erhält und dieses in ein akustisches, optisches oder haptisches Signal für den Fahrzeugbediener umwandelt.

6. Einklemmschutzsystem nach Anspruch 5,
**dadurch gekennzeichnet,**
**daß** die Feedback-Vorrichtung am Bedienschalter (20, 22) angeordnet ist.

7. Einklemmschutzsystem nach Anspruch 6,
**dadurch gekennzeichnet,**
**daß** die haptische Feedback-Meldung in Form einer Vibration oder eines erhöhten Kraftaufwandes bei der Betätigung des Bedienschalters erfolgt.

8. Einklemmschutzsystem nach Anspruch 7,
**dadurch gekennzeichnet,**
**daß** die Feedback-Meldung durch einen Elektromotor, ein Piezoelement, ein Magnetelement oder einen Gegenkraftaktuator erfolgt.

## Claims

1. A jamming protection system for movable parts of a vehicle comprising an operating switch (20, 22) for one or more parts (12) to be moved, one or more actuators (14) associated with the operating switch (20, 22), a control device (16) for the actuator(s) (14) which receives a signal from the operating switch (20, 22) and comprising a device coupled to the control device (16) for determining an irregularity in the movement of the movable part (12), **characterised in that** the control device (16) is designed such that when the operating switch (20, 22) is activated and irregularity is detected during the movement of the movable part (12), the movement is initially interrupted and then continued at a higher switch-off threshold without the operation having to be restarted.

2. A jamming protection system according to claim 1, **characterised in that** the movement of the movable part (12) is finally interrupted at a maximum switch-off threshold.

3. A jamming protection system according to claim 1 or 2, **characterised in that** before each continuation of the movement of the movable part (12) it is moved back slightly.

4. A jamming protection system according to claim 3, **characterised in that** the moving back takes place in the range of 1 to 7 mm.

5. A jamming protection system according to any one of the preceding claims, **characterised in that** the operating switch has a feedback mechanism (24) which in the case of an irregularity during the movement of the part (12) to be moved, receives a signal from the control device (16) and converts this signal into an acoustic, visual or haptic signal for the vehicle operator.

6. A jamming protection system according to claim 5, **characterised in that** the feedback mechanism is arranged on the operating switch (20, 22).

7. A jamming protection system according to claim 6, **characterised in that** the haptic feedback report takes place in the form of a vibration or an increased force expenditure when actuating the operating switch.

8. A jamming protection system according to claim 7, **characterised in that** the feedback report takes place by means of an electric motor, a piezoelement, a magnet element or a counterforce actuator.

## Revendications

1. Système de sécurité anti-pincement de parties à déplacer d'un véhicule automobile, comprenant un contacteur de manoeuvre (20, 22) pour une ou plusieurs parties (12) à déplacer, un ou plusieurs actionneurs (14) associés aux contacteurs de manoeuvre (20, 22), un dispositif de commande (16) pour le ou les actionneurs (14) qui reçoit du contacteur (20, 22) un signal, ainsi qu'un dispositif accouplé au dispositif de commande (16) pour déterminer une anomalie dans le déplacement de la partie mobile (12)
**caractérisé en ce que**
le dispositif de commande (16) est configuré de manière telle que, si le contacteur de manoeuvre (20, 22) est activé et si une anomalie est détectée dans le déplacement de la partie mobile (12), ce déplacement est d'abord interrompu, puis poursuivi avec un seuil de coupure plus élevé, sans que la manoeuvre ne doive être reprise.

2. Système de sécurité selon la revendication 1,
**caractérisé en ce que**
le déplacement de la partie mobile (12) est interrompu définitivement à un niveau maximal du seuil de coupure.

3. Système de sécurité selon la revendication 1 ou 2,
**caractérisé en ce qu'**
avant chaque reprise de déplacement de la partie mobile (12), cette partie est un peu ramenée en arrière.

4. Système de sécurité selon la revendication 3,
**caractérisé en ce que**
le déplacement en arrière est de l'ordre de 1 à 7 mm.

5. Système de sécurité selon l'une des revendications précédentes,
**caractérisé en ce que**
le contacteur de manoeuvre présente un dispositif de feed-back (24) qui, en présence d'une anomalie dans le déplacement de la partie mobile (12), reçoit du dispositif de commande (16) un signal et transforme celui-ci en un signal acoustique, optique ou haptique perceptible par l'utilisateur du véhicule.

6. Système de sécurité selon la revendication 5,
**caractérisé en ce que**
le dispositif de feed-back est monté sur le contacteur de manoeuvre (20, 22).

7. Système de sécurité selon la revendication 6,
**caractérisé en ce que**
l'information haptique de feed-back a la forme d'une vibration ou d'une augmentation de la force nécessaire pour actionner le contacteur de manoeuvre.

8. Système de sécurité selon la revendication 7,
**caractérisé en ce que**
l'information de feed-back est produite par un moteur électrique, un piezoélément, un élément magnétique ou un actionneur générant une force d'opposition.
